# EUROPEAN PATENT APPLICATION

(11) **EP 3 081 898 A1**
(43) Date of publication of application: **19.10.2016**
(21) Application number: 14869047.2
(22) Date of filing: 23.07.2014
(51) Int. Cl.: G01B 11/00

(54) **DISPLACEMENT SENSOR**

(30) Priority: 09.12.2013 JP 2013253871
(71) Applicant: Panasonic Industrial Devices SUNX Co., Ltd., Aichi 486-0901 (JP)
(72) Inventor: FURUTA Hiromasa, Kasugai-shi Aichi 486-0901 (JP)
(74) Representative: Plougmann Vingtoft a/s
(86) International application number: PCT/JP2014/069397
(87) International publication number: WO 2015/087575

(57) **Abstract**

An object is to suppress reduction in an amount of light received by a light receiver.

A displacement sensor 10 includes: a polarizing beam splitter 23 which splits detection light and reflected detection light; and a polarizing beam splitter 25 which splits incident light on a varifocal mirror 27 and reflected light therefrom, and also includes a Faraday rotator 24 and a quarter wavelength plate 26 which change the polarized light of the detection light and the reflected detection light. The polarization angles of the two light beams split by the polarizing beam splitters 23 and 25 are set to p-polarized light and s-polarized light of the polarizing beam splitters by the Faraday rotator 24 and the quarter wavelength plate 26. Consequently, the two light beams can be split by the polarizing beam splitters 23 and 25, and the reduction in the amount of light split by the polarizing beam splitters 23 and 25 and received by the light receiver is suppressed.

## Description

### TECHNICAL FIELD

The present invention relates to an optical displacement sensor.

Conventionally, an optical displacement sensor has been used as a displacement sensor that measures the displacement of a measurement target in a noncontact manner (see Patent Document 1). In this displacement sensor, in a structure where the luminous flux emitted from a light projection unit is emitted to a measurement target and the luminous flux reflected from the measurement target is received by a light reception unit, the projection optical axis of the luminous flux emitted to the measurement target and the reception optical axis of the luminous flux reflected from the measurement target are disposed on the same axis. The information on the distance to the measurement target is obtained based on the optical path length from the light projection unit to the measurement target and the emission signal of the light reception unit changed by continuously changing the optical path length from the measurement target to the light reception unit.

### PRIOR ART DOCUMENT(S)

### PATENT DOCUMENT(S)

Patent Document 1: JP-A-2003-240509

### SUMMARY OF THE INVENTION

### PROBLEM(S) TO BE SOLVED BY THE INVENTION

However, in the conventional structure, a half mirror is used as a splitting member that splits the luminous flux of the projection side and the luminous flux of the reception side. If a half mirror is used as the splitting member, when the luminous flux emitted from the light projection unit is directed to the projection optical axis by using the half mirror, the light amount is halved. Moreover, when the luminous flux reflected from the measurement target is directed to the light reception unit by using the half mirror, the light amount is halved. For this reason, a problem arises in that the amount of light received by the light reception unit is reduced.

The present description discloses a technology which can suppress reduction in an amount of light received by a light receiver.

### MEANS FOR SOLVING PROBLEM(S)

A displacement sensor disclosed by the present description includes: a light projector which emits detection light in a first polarization state; a first splitting member which has a property of splitting incident light into light having the first polarization state and light having a second polarization state and emitting them, and which transmits the detection light in the first polarization state made incident from the light projector; a first polarization rotation member which rotates the detection light in the first polarization state made incident from the first splitting member to detection light in a third polarization state; a reflecting member which is disposed on an optical path from the first polarization rotation member to a measurement target, and which is disposed perpendicular to a direction of an optical axis; a second splitting member which has a property of splitting incident light into light having the third polarization state and light having a fourth polarization state and emitting them, which transmits the detection light in the third polarization state made incident from the first polarization rotation member and directs it to the reflecting member, which directs the detection light reflected by the reflecting member to the measurement target, and which directs reflected detection light reflected by the measurement target in an opposite direction on an optical path along which the detection light is directed to the measurement target; a light receiver which receives the reflected detection light made incident from the second splitting member, through the first polarization rotation member and the first splitting member; a second polarization rotation member disposed on an optical path from the second splitting member to the reflecting member; a movement controller which moves a focus position of the detection light in the direction of the optical axis; and a position determination unit which determines a position of the measurement target in the direction of the optical axis from an amount of light received by the light receiver, wherein the second polarization rotation member rotates the detection light in the third polarization state made incident from the second splitting member to detection light in the fourth polarization state and returns it to the second splitting member, and the detection light in the fourth polarization state made incident from the second polarization rotation member passes through the second splitting member so as to be directed to the measurement target and passes through the second splitting member as reflected detection light in the fourth polarization state so as to be again emitted to the reflecting member, wherein the second polarization rotation member further rotates the detection light in the fourth polarization state made incident from the second splitting member to the detection light in the third polarization state and returns it to the second splitting member, and reflected detection light in the third polarization state made incident from the second polarization rotation member passes through the second splitting member so as to be emitted to the first polarization rotation member, wherein the first polarization rotation member rotates the detection light in the third polarization state made incident from the second polarization rotation member to detection light in the second polarization state, and wherein the first splitting member transmits the detection light in the second polarization state made incident from the first polarization rotation member and directs it to the light receiver.

This displacement sensor includes the first polarization rotation member and the second polarization rotation member. The first polarization rotation member causes the detection light in the first polarization state made incident from the first splitting member to be incident on the first splitting member as reflected detection light in the second polarization state. The second polarization rotation member causes the detection light in the third polarization state made incident on the reflecting member from the second splitting member to be incident on the second splitting member as the detection light in the fourth polarization state, and causes the reflected detection light in the fourth polarization state to be incident on the second splitting member as the reflected detection light in the third polarization state. That is, since the first polarization rotation member and the second polarization rotation member return incident light in a polarization state different from the polarization state of the light emitted from the first splitting member and the second splitting member, the first splitting member and the second splitting member can split the emitted light and the incident light by using polarization.

Further, in these splitting members, the polarization state of the incident light is set to the first polarization state and the second polarization state in the first splitting member, and set to the third polarization state and the fourth polarization state in the second splitting member. For this reason, the incident light on the splitting member passes without being split, so that the reduction in light amount by the splitting member can be suppressed in accordance with the amount by which the amount of light received by the light receiver is not reduced by the splitting compared with the case where the incident light on the splitting member is split when passing through the splitting member.

Moreover, the above-described displacement sensor may be configured, wherein the reflecting member is a varifocal mirror including: a mirror portion of a thin plate form; and a base portion which supports the mirror portion so as to be movable in a direction perpendicular to a surface thereof, and wherein the movement controller changes a curvature of the mirror portion by moving a position of the mirror portion in the direction of the optical axis with respect to the base portion by applying a voltage to the varifocal mirror, and moves the focus position of the detection light in the direction of the optical axis.

In this displacement sensor, the reflecting member is a varifocal mirror. Since the varifocal mirror itself plays a role as a condenser lens or a diffusing lens, the manufacturing cost of the device can be reduced compared with when a condenser lens or a diffusing lens is disposed separately from the varifocal mirror.

### ADVANTAGE(S) OF THE INVENTION

According to the present invention, reduction in an amount of light received by the light receiver can be suppressed.

### BRIEF DESCRIPTION OF THE DRAWING(S)

FIG. 1A is a schematic configuration diagram of a displacement sensor.
FIG. 1B is an enlarged view of the focus position.
FIG. 2 is a view explaining the polarization state of detection light.
FIG. 3 is a view explaining the polarization state of reflected detection light.
FIG. 4 is a schematic configuration diagram of a displacement sensor of another embodiment.
FIG. 5 is a schematic configuration diagram of a displacement sensor of another embodiment.

### MODE FOR CARRYING OUT THE INVENTION

### <Embodiment>

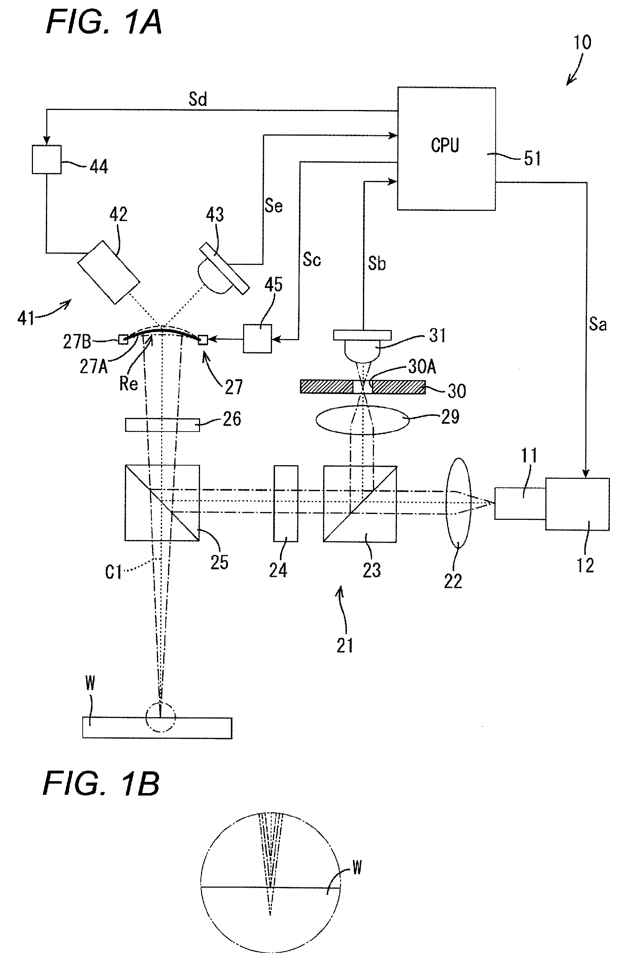

An embodiment will be described with reference to FIG. 1 to FIG. 3.

### 1. Structure of Displacement Sensor 10

As shown in FIG. 1, the displacement sensor 10 is mainly formed of a fiber 11 that emits detection light, a photodiode 31 for receiving reflected detection light reflected by a measurement target W, an optical member group 21 that converges the detection light from the fiber 11 and emits it to the measurement target W, and converges the reflected detection light from the measurement target W and emits it to the photodiode 31, a movement controller 45 which moves the focus position of the detection light in the direction of the optical axis, and a CPU 51. The fiber 11 is an example of the light projector, the photodiode 31 is an example of the light receiver, and the CPU 51 is an example of the position determination unit.

The displacement sensor 10 forms a coaxial focusing system, that is, an optical system such that the optical axis of the detection light emitted to the measurement target W and the optical axis of the reflected detection light reflected by the measurement target W are disposed on the same optical axis C1 and that the light reception amount of the photodiode 31 is maximum when the focal point of the detection light occurs on the measurement target W (hereinafter, referred to as in-focus state), and is capable of determining the position of the measurement target W in the direction of the optical axis C1 from the focus position of the detection light in the in-focus state.

The optical member group 21 is formed of a plurality of optical members such as a collimator lens 22, polarizing beam splitters 23 and 25, a Faraday rotator 24, a quarter wavelength plate 26, a varifocal mirror 27 and a focusing lens 29. The polarizing beam splitters 23 and 25 split the incident light into p-polarized light and s-polarized light, and transmit the p-polarized light and reflect the s-polarized light. The polarizing beam splitter 23 is an example of the first splitting member, and the polarizing beam splitter 25 is an example of the second splitting member. Moreover, a diaphragm portion 30 having a pinhole 30A is disposed in front of the photodiode 31.

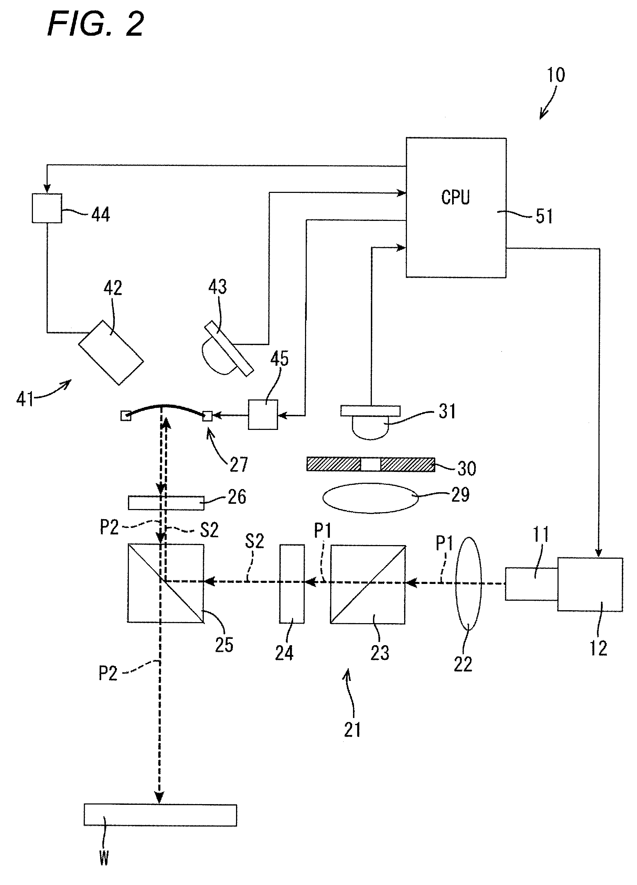

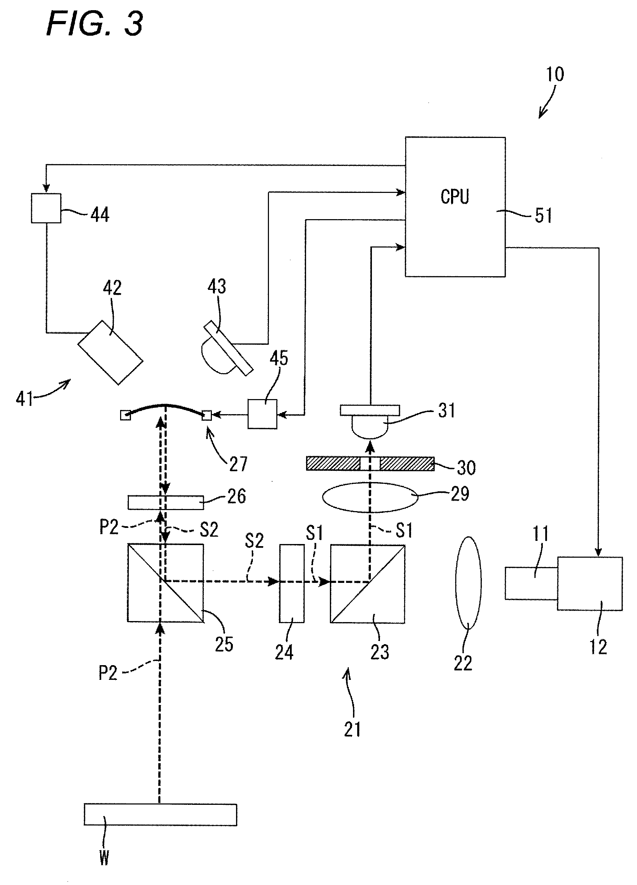

When a light source control signal Sa is sent from the CPU 51 toward a light source 12, the light source 12 is turned on and the detection light being linearly polarized light is emitted from the fiber 11 connected to the light source 12. Then, the detection light is converted into parallel light by the collimator lens 22 and then, made incident on the polarizing beam splitter 23. As shown in FIG. 2, the polarizing beam splitter 23 is disposed so that the detection light from the fiber 11 coincides with the p-polarized light of the polarizing beam splitter 23, and the detection light is transmitted by the polarizing beam splitter 23 to be made incident on the Faraday rotator 24 without being split. The p-polarized light of the polarizing beam splitter 23 is an example of the first polarization state, and is denoted by P1 in FIG. 2 and FIG. 3. The s-polarized light of the polarizing beam splitter 23 is an example of the second polarization state, and is denoted by S1 in FIG. 2 and FIG. 3. Moreover, the Faraday rotator 24 is an example of the first polarization rotation member.

The Faraday rotator 24 rotates the polarization angle of the transmitted detection light by 45° while the detection light remains being linearly polarized light. For this reason, the polarization angle of the detection light made incident on the polarizing beam splitter 25 is an intermediate angle between the p-polarized light and the s-polarized light of the polarizing beam splitter 23. On the other hand, the polarizing beam splitter 25 is disposed so that the detection light from the Faraday rotator 24 coincides with the s-polarized light of the polarizing beam splitter 25, and the detection light is reflected by the polarizing beam splitter 25 to be made incident on the quarter wavelength plate 26 without being split. The s-polarized light of the polarizing beam splitter 25 is an example of the third polarization state, and is denoted by S2 in FIG. 2 to FIG. 4. The p-polarized light of the polarizing beam splitter 25 is an example of the fourth polarization state, and is denoted by P2 in FIG. 2 to FIG. 4.

The quarter wavelength plate 26 is provided on the optical path from the polarizing beam splitter 25 to the varifocal mirror 27. The quarter wavelength plate 26 is a quarter wavelength plate for the wavelength of the detection light, and rotates the polarization angle of the detection light by 90° when the detection light reflected by the polarizing beam splitter 25 is reflected by a reflecting surface Re of the varifocal mirror 27 to return to the polarizing beam splitter 25. Thereby, the polarization angle of the detection light having returned from the quarter wavelength plate 26 coincides with the p-polarized light of the polarizing beam splitter 25, and the detection light is transmitted by the polarizing beam splitter 25 without being split. The detection light is converged by being reflected by the reflecting surface Re of the varifocal mirror 27 convex to the upside and is emitted to the measurement target W. The quarter wavelength plate 26 is an example of the second polarization rotation member.

The reflected detection light from the measurement target W is made incident on the quarter wavelength plate 26. The polarizing beam splitter 25 directs the reflected detection light in the reverse direction on the optical path along which the detection light is directed to the measurement target W. As shown in FIG. 3, the polarization angle of the reflected detection light when it is made incident on the polarizing beam splitter 25 is kept being the polarization angle of the detection light emitted to the measurement target W, that is, the p-polarized light of the polarizing beam splitter 25, and the polarizing beam splitter 25 transmits the reflected detection light having the p-polarized light of the polarizing beam splitter 25 so as to be made incident on the quarter wavelength plate 26 without splitting it.

The quarter wavelength plate 26 rotates the polarization angle of the detection light by 90° when the reflected detection light transmitted by the polarizing beam splitter 25 is reflected by the reflecting surface Re of the varifocal mirror 27 to return to the polarizing beam splitter 25 as in the case of the detection light. Thereby, the reflected detection light having returned from the quarter wavelength plate 26 becomes the s-polarized light of the polarizing beam splitter 25, and the reflected detection light is reflected by the polarizing beam splitter 25 to be made incident on the Faraday rotator 24 without being split. In this case, the reflected detection light is converted into parallel light by being reflected by the reflecting surface Re of the varifocal mirror 27, and is made incident on the Faraday rotator 24.

The Faraday rotator 24 rotates the polarization angle of the transmitted reflected detection light by 45° while the reflected detection light remains being linearly polarized light as in the case of the detection light. Thereby, the polarization angle of the reflected detection light made incident on the polarizing beam splitter 23 coincides with the s-polarized light of the polarizing beam splitter 23. That is, by the detection light and the reflected detection light passing therethrough, the Faraday rotator 24 rotates the polarization angles by 90°, and changes the detection light having the p-polarized light of the polarizing beam splitter 23 to the reflected detection light having the s-polarized light of the polarizing beam splitter 23.

For this reason, the reflected detection light is reflected by the polarizing beam splitter 23 to be converged (condensed) by the focusing lens 29 without being split. Then, the reflected detection light passes through the pinhole 30A of the diaphragm portion 30 and is made incident on the photodiode 31 to be received. The reflected detection light received by the photodiode 31 is photoelectrically converted in the photodiode 31, and is then outputted to the CPU 51 as a light reception signal Sb corresponding to the light reception amount.

The varifocal mirror 27 is provided with a mirror portion 27A of a thin plate form and a base portion 27B supporting the mirror portion 27A in such a manner as to be movable in a direction perpendicular to the surface thereof, and is provided on the optical path from the polarizing beam splitter 23 to the measurement target W. The mirror portion 27A is disposed perpendicular to the direction of the optical axis C1, and has the reflecting surface Re on the lower surface. The base portion 27B is provided with a non-illustrated fixed electrode, and the movement controller 45 is electrically connected to the mirror portion 27A and the fixed electrode. The varifocal mirror 27 is an example of the reflecting member.

When a control signal Sc is sent from the CPU 51, the movement controller 45 supplies a pulse voltage or an AC voltage of a predetermined frequency to between the mirror portion 27A and the fixed electrode. Thereby, an electrostatic force acts between the mirror portion 27A and the fixed electrode, so that the central part of the mirror portion 27A moves in the direction of the optical axis C1 with respect to the base portion 27B. The movement amount of the central part of the mirror portion 27A changes according to the predetermined frequency of the pulse voltage or the AC voltage, and the mirror portion 27A vibrates at the predetermined frequency with respect to the base portion 27B. Thereby, the curvature of the mirror portion 27A changes at the predetermined frequency.

When the curvature of the mirror portion 27A changes, the focus position of the detection light changes. As shown by the broken line in FIG. 1, when the mirror portion 27A moves in a direction away from the measurement target W in the direction of the optical axis C1, the focus position of the detection light moves in a direction approaching the varifocal mirror 27 in the direction of the optical axis C1 (see FIG. 1B). Moreover, as shown by the chain double-dashed line in FIG. 1, when the mirror portion 27A moves in a direction approaching the measurement target W in the direction of the optical axis C1, the focus position of the detection light changes in a direction away from the varifocal mirror 27 in the direction of the optical axis C1 (see FIG. 1B).

The CPU 51 detects the position of the central part of the mirror portion 27A, that is, the curvature of the mirror portion 27A by using a position detector 41. The position detector 41 is provided with a laser diode 42, a photodiode 43 and a laser driving control circuit 44, and detects the position of the mirror portion 27A of the varifocal mirror 27 by triangulation. When a light emission signal Sd is sent from the CPU 51 to the laser driving control circuit 44, a driving current is passed from the laser driving control circuit 44 through the laser diode 42, so that laser light is emitted from the laser diode 42. The laser light is made incident on the reverse surface of the reflecting surface Re of the mirror portion 27A to be reflected, and is made incident on the photodiode 43 to be received. The reflected laser light received by the photodiode 43 is photoelectrically converted in the photodiode 43, and is then outputted to the CPU 51 as a light reception signal Se corresponding to the light reception amount. The light reception signal Se is an example of the position signal.

The CPU 51 detects the curvature of the mirror portion 27A from the light reception signal Sb in the in-focus state where the light reception signal Sb is maximum, and obtains the focus position of the detection light. Since the measurement target W is present in the focus position of the detection light in the in-focus state, the position of the measurement target W in the direction of the optical axis C1 can be determined.

### 2. Advantages of the Present Embodiment

(1) The displacement sensor 10 of the present embodiment has the Faraday rotator 24. The Faraday rotator 24 causes the detection light made incident from the polarizing beam splitter 23 and having the p-polarized light of the polarizing beam splitter 23 to be incident on the polarizing beam splitter 23 as the reflected detection light having the s-polarized light of the polarizing beam splitter 23. That is, since the Faraday rotator 24 returns the reflected detection light of a polarization angle different from that of the detection light emitted from the polarizing beam splitter 23, as the optical member that splits the detection light and the reflected detection light, a polarizing beam splitter that performs the splitting by polarization may be used.
(2) Further, in the displacement sensor 10 of the present embodiment, the polarization angle of the detection light made incident on the polarizing beam splitter 25 is set to the p-polarized light or the s-polarized light of the polarizing beam splitter 25 by the Faraday rotator 24 and the like. For this reason, the detection light and the reflected detection light made incident on the polarizing beam splitter 25 pass (are transmitted or reflected) without being split. Consequently, the reduction in light amount by the splitting member can be suppressed in accordance with the amount by which the amount of light received by the light receiver is not reduced by the splitting compared with the case where the detection light and the reflected detection light are split when passing through the polarizing beam splitter 25.
(3) The displacement sensor 10 of the present embodiment has the quarter wavelength plate 26. The quarter wavelength plate 26 is provided on the optical path from the polarizing beam splitter 25 to the varifocal mirror 27, and causes the detection light made incident from the polarizing beam splitter 25 and having the s-polarized light of the polarizing beam splitter 25 to be incident on the polarizing beam splitter 25 as the detection light having the p-polarized light of the polarizing beam splitter 25. Moreover, it causes the reflected detection light made incident from the polarizing beam splitter 25 and having the p-polarized light of the polarizing beam splitter 25 to be incident on the polarizing beam splitter 25 as the reflected detection light having the s-polarized light of the polarizing beam splitter 25. That is, since the quarter wavelength plate 26 returns incident light of a polarization angle different from that of the emitted light emitted from the polarizing beam splitter 25, as the optical member that splits the emitted light and the incident light, a polarizing beam splitter that performs the splitting by polarization may be used.
(4) Further, in the displacement sensor 10 of the present embodiment, the polarization angle of the detection light made incident on the polarizing beam splitter 25 is set to the p-polarized light or the s-polarized light of the polarizing beam splitter 25 by the quarter wavelength plate 26 and the like. For this reason, the detection light and the reflected detection light made incident on the polarizing beam splitter 25 pass (are transmitted or reflected) without being split. Consequently, the reduction in light amount by the splitting member can be suppressed in accordance with the amount by which the amount of light received by the light receiver is not reduced by the splitting compared with the case where the detection light and the reflected detection light are split when passing through the polarizing beam splitter 25.
(5) The displacement sensor 10 of the present embodiment has the varifocal mirror 27. Since the varifocal mirror 27 itself plays a role as a condenser lens, the manufacturing cost of the device can be reduced compared with when a condenser lens is disposed separately from the varifocal mirror 27.

### <Other Embodiments>

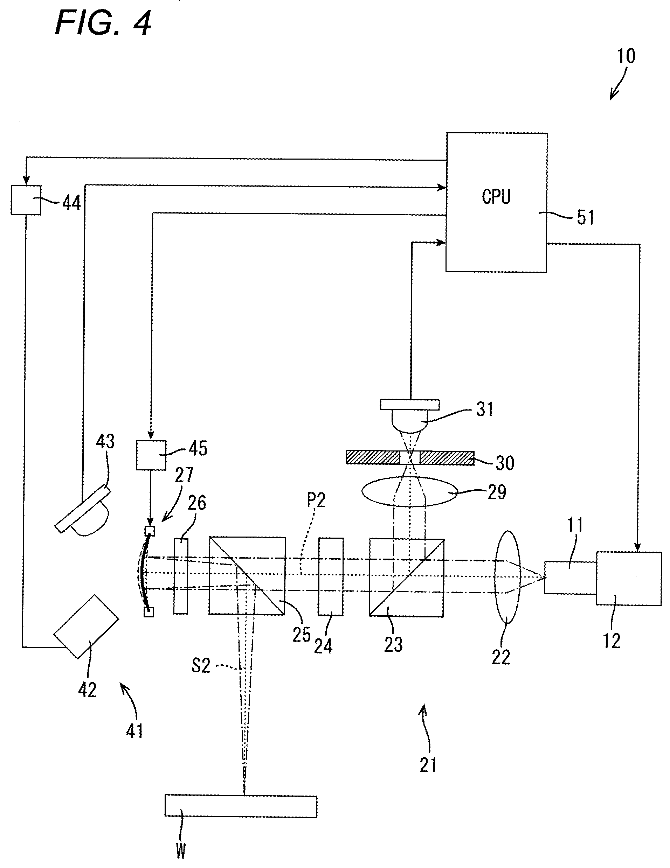

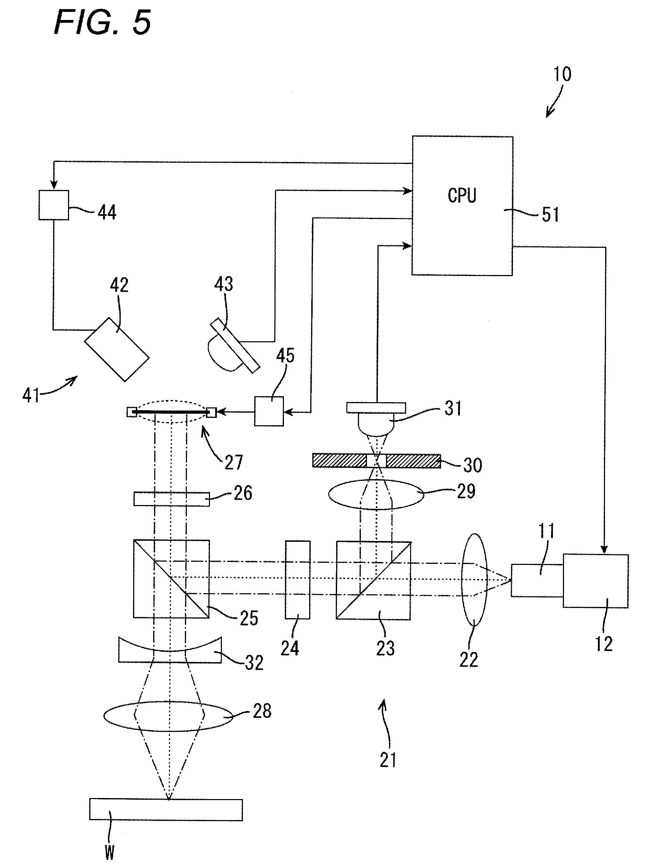

The present invention is not limited to the embodiment described with reference to the description given above and the drawings, for example, the following various embodiments are within the technical scope of the present invention:
(1) While in the above-described embodiment, description is given by using an example where arrangement is made so that the detection light from the Faraday rotator 24 coincides with the s-polarized light of the polarizing beam splitter 25 and the varifocal mirror 27 and the measurement target W are disposed so as face each other with the polarizing beam splitter 25 in between, the present invention is not limited thereto. For example, when arrangement is made so that the detection light from the Faraday rotator 24 coincides with the p-polarized light of the polarizing beam splitter 23, as shown in FIG. 4, the varifocal mirror 27 and the Faraday rotator 24 may be disposed so as to face each other with the polarizing beam splitter 25 in between.
(2) Likewise, the positions of the fiber 11 and the photodiode 31 with respect to the polarizing beam splitter 23 are not limited to the above-described embodiment. For example, when arrangement is made so that the detection light from the fiber 11 coincides with the s-polarized light of the polarizing beam splitter 23, the positions of the fiber 11 and the photodiode 31 shown in FIG. 1 may be reversed.
(3) While in the above-described embodiment, description is given by using an example where the collimator lens 22 is disposed between the fiber 11 and the polarizing beam splitter 23 on the optical path of the detection light, the present invention is not limited thereto. For example, the collimator lens 22 may be disposed between the polarizing beam splitter 23 and the Faraday rotator 24. In this case, since the collimator lens 22 is capable of playing a role in condensing the reflected detection light, it is unnecessary to dispose the focusing lens 29 separately from the collimator lens 22.
(4) While in the above-described embodiment, description is given by using an example where light condensing is performed by using only the varifocal mirror 27 when the detection light is condensed, the present invention is not limited thereto. For example, as shown in FIG. 5, an object lens 28 and a diffusing lens 32 may be disposed in this order from the side of the measurement target W between the polarizing beam splitter 25 and the measurement target W on the optical path of the detection light. In this case, the mirror portion 27A of the varifocal mirror 27 may be convex to the downside as well as convex to the upside and function as a diffusing lens. When the object lens 28 and the diffusing lens 32 are disposed between the polarizing beam splitter 25 and the measurement target W on the optical path of the detection light, the spot diameter of the detection light can be made small compared with when the object lens 28 and the diffusing lens 32 are not disposed, so that the position of the measurement target W in the direction of the optical axis C 1 can be determined without being affected by the patterns formed on the surface of the measurement target W. Moreover, a structure may be adopted in which only the object lens 28 is disposed while the diffusing lens 32 is absent.
(5) While in the above-described embodiment, description is given by using an example where when the reflected detection light is received, it passes through the pinhole 30A of the diaphragm portion 30 and the reflected detection light made incident on the photodiode 31 is received, the present invention is not limited thereto. For example, the optical fiber for light reception may be set in the position of the pinhole 30A so as to replace them. By using the optical fiber for light reception, the light receiving element can be made away from the measurement target W to realize reduction in head size and a noise resistance measure is provided, so that the position of the measurement target W in the direction of the optical axis C1 can be accurately determined.
(6) While in the above-described embodiment, description is given by using an example where the fiber 11 is used as a member that emits detection light, the present invention is not limited thereto. For example, a laser diode, a light emitting diode or the like may be used. However, since the fiber 11 has a detection light spread angle stable at a substantially fixed value compared with the laser diode, the optical design to determine the selection and arrangement of the optical member group 21 is facilitated. Moreover, since the fiber 11 itself does not emit light, the rise in the temperature of the optical member group 21 is suppressed compared with a member that itself emits light like a laser diode, so that the deterioration of the detection accuracy due to the rise in the temperature of the optical member group 21 can be suppressed.
(7) While in the above-described embodiment, description is given by using an example where the position detector 41 that detects the position of the mirror portion 27A of the varifocal mirror 27 is an optical displacement sensor and detects the position by triangulation, the present invention is not limited thereto. For example, the position of the mirror portion 27A of the varifocal mirror 27 may be detected by a focusing system optical displacement sensor.
(8) Moreover, the member that detects the position of the mirror portion 27A of the varifocal mirror 27 is not limited to an optical displacement sensor. When the mirror portion 27A of the varifocal mirror 27 is displaced by the pulse voltage or the AC voltage of the predetermined frequency supplied from the movement controller 45, the position of the mirror portion 27A of the varifocal mirror 27 may be detected from the rising edge or the falling edge of the pulse voltage or the phase of the AC voltage.
(9) While in the above-described embodiment, description is given by using an example where the focus position of the detection light is moved in the direction of the optical axis C1 by the varifocal mirror 27 and the movement controller 45, the present invention is not limited thereto. For example, a structure as in the background art may be adopted where a planar reflecting mirror and an intermediate lens with a fixed curvature are disposed and the focus position of the detection light is moved by changing the distance between the mirror and the intermediate lens, and the intermediate lens may be vibrated by using a tuning fork as means for changing the distance between the mirror and the intermediate lens; however, when the intermediate lens is vibrated by using a tuning fork, since the focus position rotates with respect to the direction of the optical axis C1, the detection light condensing performance becomes deteriorated. For this reason, it is preferable to use the varifocal mirror 27 not causing the above-mentioned problem and further, requiring no intermediate lens.
(10) While in the above-described embodiment, description is given by using a polarizing beam splitter as the "splitting means", the present invention is not limited thereto. For example, a polarization hologram, a linearly polarizing plate or the like may be used.
(11) While in the above-described embodiment, description is given by using a quarter wavelength plate as the "second polarization rotation member", the present invention is not limited thereto. For example, a Faraday rotator may be used.

### DESCRIPTION OF REFERENCE SYMBOL(S)

10: Displacement Sensor; 11: Fiber; 12: Light Source; 23: Polarization Beam Splitter; 24: Faraday Rotator; 25: Polarization Beam Splitter; 26: Quarter Wavelength Plate; 27: Varifocal Mirror; 27A: Mirror Portion; 27B: Base Portion; 31: Photodiode; 41: Position Detector; 45: Movement Controller; 51: CPU; W: Measurement Target

## Claims

1. A displacement sensor comprising:
a light projector which emits detection light in a first polarization state;
a first splitting member which has a property of splitting incident light into light having the first polarization state and light having a second polarization state and emitting them, and which transmits the detection light in the first polarization state made incident from the light projector;
a first polarization rotation member which rotates the detection light in the first polarization state made incident from the first splitting member to detection light in a third polarization state;
a reflecting member which is disposed on an optical path from the first polarization rotation member to a measurement target, and which is disposed vertically to a direction of an optical axis;
a second splitting member which has a property of splitting incident light into light having the third polarization state and light having a fourth polarization state and emitting them, which transmits the detection light in the third polarization state made incident from the first polarization rotation member and directs it to the reflecting member, which directs the detection light reflected by the reflecting member to the measurement target, and which directs reflected detection light reflected by the measurement target in an opposite direction on an optical path along which the detection light is directed to the measurement target;
a light receiver which receives the reflected detection light made incident from the second splitting member, through the first polarization rotation member and the first splitting member;
a second polarization rotation member disposed on an optical path from the second splitting member to the reflecting member;
a movement controller which moves a focus position of the detection light in the direction of the optical axis; and
a position determination unit which determines a position of the measurement target in the direction of the optical axis from an amount of light received by the light receiver,
wherein the second polarization rotation member rotates the detection light in the third polarization state made incident from the second splitting member to detection light in the fourth polarization state and returns it to the second splitting member, and the detection light in the fourth polarization state made incident from the second polarization rotation member passes through the second splitting member so as to be directed to the measurement target and passes through the second splitting member as reflected detection light in the fourth polarization state so as to be again emitted to the reflecting member,
wherein the second polarization rotation member further rotates the detection light in the fourth polarization state made incident from the second splitting member to the detection light in the third polarization state and returns it to the second splitting member, and reflected detection light in the third polarization state made incident from the second polarization rotation member passes through the second splitting member so as to be emitted to the first polarization rotation member,
wherein the first polarization rotation member rotates the detection light in the third polarization state made incident from the second polarization rotation member to detection light in the second polarization state, and
wherein the first splitting member transmits the detection light in the second polarization state made incident from the first polarization rotation member and directs it to the light receiver.

2. The displacement sensor according to claim 1,
wherein the reflecting member is a varifocal mirror comprising: a mirror portion of a thin plate form; and a base portion which supports the mirror portion so as to be movable in a direction perpendicular to a surface thereof, and
wherein the movement controller changes a curvature of the mirror portion by moving a position of the mirror portion in the direction of the optical axis with respect to the base portion by applying a voltage to the varifocal mirror, and moves the focus position of the detection light in the direction of the optical axis.
